# EUROPÄISCHE PATENTSCHRIFT

(11) **EP 3 552 472 B1**
(45) Veröffentlichungstag und Bekanntmachung des Hinweises auf die Patenterteilung: **25.05.2022**
(21) Anmeldenummer: 19155632.3
(22) Anmeldetag: 06.02.2019
(51) Int. Cl.: A01D 41/127, G05B 19/418, G05B 19/042

(54) **LANDWIRTSCHAFTLICHE ARBEITSMASCHINE**
AGRICULTURAL MACHINE
ENGIN DE TRAVAIL AGRICOLE

(30) Priorität: 10.04.2018 DE 102018108494
(43) Veröffentlichungstag der Anmeldung: 16.10.2019
(73) Patentinhaber: CLAAS Selbstfahrende Erntemaschinen GmbH, 33428 Harsewinkel (DE)
(72) Erfinder: Berger, Arthur, 49143 Bissendorf (DE); Dieckmeyer, Sascha, 49326 Melle (DE); Meyer, Lennart, 52062 Aachen (DE); Grove, Carsten, 48361 Beelen (DE); Schröder, Axel, 33330 Gütersloh (DE)
(74) Vertreter: CLAAS Gruppe

(56) Entgegenhaltungen:
- EP-A1- 1 403 799
- EP-A1- 3 085 221
- DE-A1- 19 514 223
- DE-A1-102009 009 767
- DE-A1-102010 017 676

## Beschreibung

Die Erfindung betrifft eine landwirtschaftliche Arbeitsmaschine gemäß dem Oberbegriff von Anspruch 1 sowie ein System gemäß dem Oberbegriff von Anspruch 11.

Landwirtschaftliche Arbeitsmaschinen wie beispielsweise Traktoren oder Erntemaschinen sind aus dem Stand der Technik bekannt. Zur Erleichterung der Steuerung der landwirtschaftlichen Arbeitsmaschinen weisen diese in der Regel ein Fahrerassistenzsystem auf, welches im Rahmen der Durchführung eines Arbeitsprozesses Fahrfunktionen der landwirtschaftlichen Arbeitsmaschine und mindestens ein Arbeitsaggregat der landwirtschaftlichen Arbeitsmaschine steuert. Dabei kann der Bediener zur Einstellung der Steuerung vom Fahrerassistenzsystem geführt werden, indem er externe Informationen in das Fahrerassistenzsystem eingibt und die Steuerung auch abhängig von diesen Informationen die landwirtschaftliche Arbeitsmaschine steuert. Ein solches Fahrerassistenzsystem ist für eine Erntemaschine in der DE 10 2009 009 767 A1 beschrieben, von dem die Erfindung ausgeht. Zwar stellt das Fahrerassistenzsystem bereits eine erhebliche Erleichterung zur Steuerung des Arbeitsprozesses bereit, die manuellen Bedienereingaben bedingen jedoch nach wie vor eine gewisse Ablenkung des Bedieners während des Arbeitsprozesses.

Aus der EP 1 403 799 A1 ist es bekannt, Daten zwischen einer landwirtschaftlichen Arbeitsmaschine und beispielsweise einem Weiterverarbeiter auszutauschen, um den gesamten Ernteprozess einschließlich der Weiterverarbeitung des Ernteguts besser zu managen.

Nachteilig ist, dass der Bediener der landwirtschaftlichen Arbeitsmaschine manuell die Regelstrategien im Fahrerassistenzsystem anpassen muss und externe Informationen lediglich durch bedienerseitige Eingabe von Einstellungen in das Fahrerassistenzsystem berücksichtigt werden können. Solche Informationen können ihm beispielweise durch ein Datenaustauschsystem mitgeteilt werden.

Der Erfindung liegt das Problem zu Grunde, die Steuerung der landwirtschaftlichen Arbeitsmaschine durch das Fahrerassistenzsystem sowie die Bedienung desselben zu erleichtern und zu verbessern.

Das vorstehend beschriebene Problem wird bei einer landwirtschaftlichen Arbeitsmaschine gemäß dem Oberbegriff von Anspruch 1 durch die Merkmale des kennzeichnenden Teils von Anspruch 1 gelöst.

Dadurch, dass das Fahrerassistenzsystem eine Schnittstelle zur Kommunikation mit einer entfernt von der landwirtschaftlichen Arbeitsmaschine angeordneten externen Rechnereinheit aufweist, über welche Daten zwischen dem Fahrerassistenzsystem und der externen Rechnereinheit austauschbar sind, können auf besonders einfache Art und Weise externe Daten dem Fahrerassistenzsystem und/oder dem Bediener zur Verfügung gestellt werden.

Dadurch, dass während des Arbeitsprozesses der landwirtschaftlichen Arbeitsmaschinen Daten von der externen Rechnereinheit über die Schnittstelle an das Fahrerassistenzsystem übergeben werden und dass die Regelstrategie für die Durchführung des Arbeitsprozesses in Abhängigkeit von den übergebenen Daten ausgewählt wird, wird eine direkte und besonders einfache Optimierung der Einstellung der landwirtschaftlichen Arbeitsmaschine ermöglicht. Es kann besonders einfach externes den Arbeitsprozess beeinflussendes Umgebungswissen und/oder für den Arbeitsprozess spezifisches Expertenwissen bereitgestellt und berücksichtigt werden. Hierdurch lassen sich die Arbeitsprozessqualität und das Arbeitsergebnis auf besonders einfache und komfortable Art und Weise steigern. Es wird insbesondere ermöglicht, die Regelintelligenz des Fahrerassistenzsystems durch die von extern übertragenen Daten in für den Arbeitsprozess positiver Weise zu beeinflussen. Durch die von der externen Rechnereinheit übertragenen Daten kann die Auswahl der Regelstrategie auf einfache Art und Weise beeinflusst werden. Hierfür ist das Übertragen nur weniger Daten notwendig. Es wird kein hohes Datenübertragungsvolumen benötigt, wie dies etwa der Fall wäre, wenn nicht die Regelintelligenz des Fahrerassistenzsystems genutzt und lediglich beeinflusst würde, sondern die Regelintelligenz vollständig ausgelagert würde. Dies wäre im ländlichen Raum, in dem hohe Datenübertragungsraten nur selten in ausreichendem Maße zur Verfügung stehen, in vielen Regionen auch nicht möglich.

In einer Weiterbildung der Erfindung gemäß Anspruch 2 wird die Regelstrategie auch in Abhängigkeit von den Messwerten von Sensoren der landwirtschaftlichen Arbeitsmaschine ausgewählt.

In den Ansprüchen 3 und 4 werden die übertragenen Daten näher spezifiziert. Die übertragenen Daten werden vorzugsweise gemäß Anspruch 5, insbesondere analog zu den Messdaten, in einen Optimierungsprozess des Fahrerassistenzsystems eingesteuert.

Die Auswahl der Regelstrategie für die Durchführung des Arbeitsprozesses in Abhängigkeit von den übertragenden Daten und/oder den Messwerten kann durch die übertragenen Daten ausgelöst werden oder ist von einem Bediener auslösbar (Anspruch 6).

Gemäß Anspruch 7 können über die Schnittstelle auch Daten an die externe Rechnereinheit übertragen werden. Hierdurch wird eine Auswertung der Daten auf der externen Rechnereinheit ermöglicht.

Gemäß Anspruch 8 weist das Fahrerassistenzsystem einen Speicher und eine Recheneinheit auf. Anspruch 9 beschreibt eine Benutzerschnittstelle mit einer Anzeigeeinheit.

Gemäß Anspruch 10 können über die Schnittstelle zusätzliche Daten von einem Speichermedium an das Fahrerassistenzsystem übergeben werden und auch in Abhängigkeit von diesen Daten die Regelstrategie für die Durchführung des Arbeitsprozesses ausgewählt werden.

Darüber hinaus wird die eingangs beschriebene Aufgabe bei einem System aus einer landwirtschaftlichen Arbeitsmaschine und einer externen Rechnereinheit gemäß dem Oberbegriff von Anspruch 11 durch die Merkmale des kennzeichnenden Teils von Anspruch 11 gelöst.

Es ergeben sich dieselben zuvor im Zusammenhang mit der landwirtschaftlichen Arbeitsmaschine beschriebenen Vorteile. Die landwirtschaftliche Arbeitsmaschine des Systems kann alle im Zusammenhang mit der landwirtschaftlichen Arbeitsmaschine beschriebenen Merkmale einzeln oder in Kombination aufweisen.

Bevorzugte Ausgestaltungen des Systems sind in den Ansprüchen 12 bis 15 besch rieben.

Im Folgenden wird die Erfindung anhand einer lediglich Ausführungsbeispiele darstellenden Zeichnung näher erläutert. In der Zeichnung zeigt
- Fig. 1: ein vorschlagsgemäßes System mit einer Seitenansicht einer vorschlagsgemäßen Landwirtschaftsmaschine,
- Fig. 2: eine schematische Darstellung des Fahrerassistenzsystems.

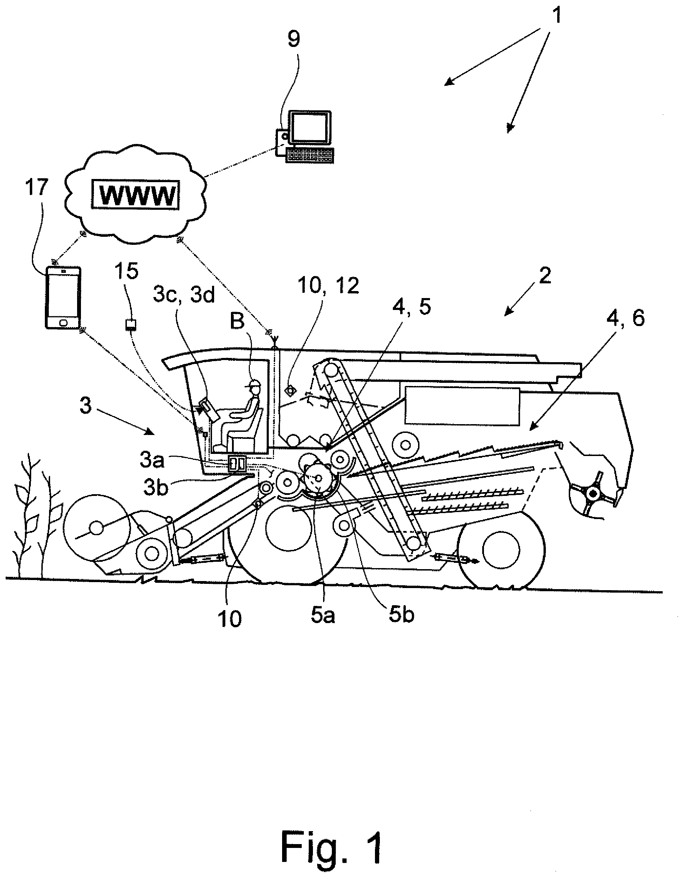

Ein vorschlagsgemäßes System 1 mit einer vorschlagsgemäßen landwirtschaftlichen Arbeitsmaschine 2 ist in Fig. 1 gezeigt. Hier handelt es sich bei der landwirtschaftlichen Arbeitsmaschine 2 um eine Erntemaschine, insbesondere einen Mähdrescher. Alternativ kann die Erntemaschine auch ein Feldhäcksler oder dergleichen sein. Ferner kann die landwirtschaftliche Arbeitsmaschine 2 eine landwirtschaftliche Zugmaschine wie ein Traktor oder dergleichen sein.

Die landwirtschaftliche Arbeitsmaschine 2 weist ein Fahrerassistenzsystem 3 auf, welches im Rahmen der Durchführung eines Arbeitsprozesses Fahrfunktionen der landwirtschaftlichen Arbeitsmaschine 2 und mindestens ein Arbeitsaggregat 4 der landwirtschaftlichen Arbeitsmaschine 2 steuert. Unter einem Arbeitsaggregat 4 werden solche Aggregate der landwirtschaftlichen Arbeitsmaschine 2 verstanden, welche zum Arbeitsprozess derselben selbst direkt beitragen und auf diesen Einfluss nehmen. Fahrfunktionen wie die Lenkung oder den Vortrieb der landwirtschaftlichen Arbeitsmaschine bereitstellende Einheiten stellen keine Arbeitsaggregate 4 im Sinne der vorliegenden Erfindung dar.

Das Arbeitsaggregat 4 kann ein internes Arbeitsaggregat 4 der landwirtschaftlichen Arbeitsmaschine 2 oder ein externes Arbeitsaggregat 4, insbesondere ein Anbaugerät, sein. Im Ausführungsbeispiel ist das Arbeitsaggregat 4 ein Dreschwerk 5 zum Dreschen von aufgenommenem Erntegut zu Korngut. Das Dreschwerk 5 ist mit einer Dreschtrommel 5a ausgestattet, die mit einem Dreschkorb 5b zusammenwirkt. Dem Dreschwerk 5 ist eine Abscheideeinrichtung 6 prozesstechnisch nachgelagert, auch diese stellt ein Arbeitsaggregat 4 der landwirtschaftlichen Arbeitsmaschine 2 dar. Der dem Dreschwerk 5 zugeführte Erntegutstrom wird also im Anschluss, ohne das hier bereits gewonnene Korngut, der Abscheideeinrichtung 6 zugeführt.

Das mindestens eine Arbeitsaggregat 4, hier das Dreschwerk 5, kann durch die Vorgabe verschiedener Aggregatparameter angesteuert werden. Ein Aggregatparameter ist ein Einstellwert des Arbeitsaggregats, d. h. eine Aggregateeinstellung. Hierunter fallen, in Abhängigkeit vom Aufbau des Dreschwerks 5, beispielsweise die Korbweite - also der Abstand zwischen einer Dreschtrommel 5a und einem Dreschkorb 5b - sowie Antriebsparameter, wie beispielsweise eine Trommeldrehzahl oder sonstige Bewegungskennzahlen der Dreschtrommel.

Die landwirtschaftliche Arbeitsmaschine 2 kann durch das Fahrerassistenzsystem 3 hier und vorzugsweise gemäß verschiedener Bearbeitungsstrategien betreibbar sein. Diese sind vorzugsweise zumindest durch den Bediener B auswählbar. Diese Bearbeitungsstrategien können beispielweise eine "Maximierung des Durchsatz", eine "Minimierung des Kraftstoffverbrauchs" und/oder eine "Maximierung der Druschqualität" sein. Hinsichtlich des Fahrerassistenzsystems 3 wird auf die EP 2 687 923 A2 hingewiesen, in welcher die Bearbeitungsstrategien und deren Auswahl durch den Bediener beschrieben ist.

Vorschlagsgemäß weist das Fahrerassistenzsystem 3 ein Regelwerk 7 in Form von, insbesondere parametrierbaren, Regelstrategien auf, welche in dem Fahrerassistenzsystem 3 abgelegt sind. In dem Fahrerassistenzsystem 3 sind hier und vorzugsweise für die unterschiedlichen Bearbeitungsstrategien unterschiedliche Regelstrategien für die Arbeitsaggregate 4 in einem Regelwerk 7 abgelegt. Auf deren Basis kann das Fahrerassistenzsystem 3 das mindestens eine Arbeitsaggregat 4 gemäß einer Regelstrategie steuern.

Das Fahrerassistenzsystem 3 weist hier und vorzugsweise einen Speicher 3a auf. In diesem Speicher 3a ist das Regelwerk 7 abgelegt. Ferner weist das Fahrerassistenzsystem 3 im Ausführungsbeispiel eine Recheneinheit 3b auf, über welche die Fahrfunktion der landwirtschaftlichen Arbeitsmaschine 2 und mindestens ein Arbeitsaggregat 4 der landwirtschaftlichen Arbeitsmaschine 2 gesteuert werden. Steuern ist hier weit zu verstehen, es umfasst sowohl ein Regeln als auch ein Steuern.

Ferner weist das Fahrerassistenzsystem 3 eine Benutzerschnittstelle 3c mit einer Anzeigeeinheit 3d auf. Hier und vorzugsweise ist die Benutzerschnittstelle 3c ein Touchscreenmonitor. Mittels der Benutzerschnittstelle 3c können Zustände angezeigt und/oder Einstellungen der Steuerung des mindestens einen Arbeitsaggregats 4 und gegebenenfalls der Fahrfunktion vorgenommen werden.

Ferner weist das Fahrerassistenzsystem 3 eine Schnittstelle 8 zur Kommunikation mit einer entfernt von der landwirtschaftlichen Arbeitsmaschine 2 angeordneten externen Rechnereinheit 9 auf, über welche Daten zwischen dem Fahrerassistenzsystem 3 und der externen Rechnereinheit 9 austauschbar sind. Grundsätzlich kann es sich um einen unidirektionalen Austausch handeln, vorzugsweise findet jedoch ein bidirektionaler Austausch statt. Der Austausch erfolgt hier drahtlos, bspw. über ein Mobilfunknetz und/oder ein WLAN, vorzugsweise über das Internet.

Mit der erfindungsgemäßen landwirtschaftlichen Arbeitsmaschine 2 werden nun während des Arbeitsprozesses der landwirtschaftlichen Arbeitsmaschine 2 Daten von der externen Rechnereinheit 9 über die Schnittstelle 8 an das Fahrerassistenzsystem 3 übergeben und die Regelstrategie für die Durchführung des Arbeitsprozesses in Abhängigkeit von den übergebenen Daten ausgewählt. Hier wird die Regelstrategie des mindestens einen Arbeitsaggregats 4 ausgewählt. Dies ermöglicht ein ganz besonders einfaches, schnelles und sicheres Nutzen von externen Daten für den Arbeitsprozess. Der Bediener B der landwirtschaftlichen Arbeitsmaschine 2 wird hierdurch erheblich entlastet. Hier ist es vorzugsweise so, dass das Fahrerassistenzsystem 3 in Abhängigkeit von den übergebenen Daten die Regelstrategie automatisch auswählt und gegebenenfalls nach Quittieren durch den Bediener B anwendet.

Das Vorsehen des Regelwerks 7 im Fahrerassistenzsystem 3 und das Übergeben von externen Daten an das Fahrerassistenzsystem 3, das dann Regelstrategien aus dem abgelegten Regelwerk 7 in Abhängigkeit von den übergebenen Daten auswählt, ermöglicht es, von extern auf den Arbeitsprozess auf einfache Art und Weise und mit einer geringen Datenübertragungsbandbreite einzuwirken. Während die Regelintelligenz im Fahrerassistenzsystem 3 vorgesehen ist, wird diese nur durch die externen Daten beeinflusst, indem auf deren Basis die Regelstrategie ausgewählt wird. Die Regelung selbst verbleibt dabei im Fahrerassistenzsystem 3.

Unter der Auswahl der Regelstrategie ist hier und vorzugsweise eine Auswahl einer abgelegten Regelungsstrategie und/oder eine Parametrierung einer abgelegten Regelstrategie des Regelwerks 7 zu verstehen.

Hier und vorzugsweise weist die landwirtschaftliche Arbeitsmaschine 2 mindestens einen Sensor 10 auf, dessen Messwerte mittels einer Sensorüberwachung 11 überwacht werden. Bei dem Sensor 10 kann es sich beispielsweise um einen Korngutsensor 12 handeln, welcher insbesondere zur Erfassung eines Bruchkornanteils und/oder eines Nichtkornanteils eingerichtet ist. Zur Auswertung der Messwerte des Sensors 10 weist das Fahrerassistenzsystem 3 hier und vorzugsweise eine Sensorüberwachung 11 auf. Die Regelstrategie für die Durchführung des Arbeitsprozesses wird hier und vorzugsweise auch in Abhängigkeit von den Messwerten ausgewählt. Die Messwerte werden vorzugsweise zyklisch, insbesondere laufend, überwacht. Die Auswahl der Regelstrategie erfolgt hier und vorzugsweise in Abhängigkeit von den Messwerten und von den von der externen Rechnereinheit 9 übertragenen Daten.

Die übertragenen Daten, in Abhängigkeit von denen die Regelstrategie für die Durchführung des Arbeitsprozesses ausgewählt wird, enthalten hier und vorzugsweise den Arbeitsprozess beeinflussende Umfelddaten aus dem Umfeld der den Arbeitsprozess durchführenden landwirtschaftlichen Arbeitsmaschine 2. Dies können insbesondere Wetterdaten, sowohl zum aktuellen Wetter, zur Wettervorhersage, als auch zum vergangenen Wetterverlauf sein, und/oder Schlaginformationen, beispielsweise betreffend die Fruchtart, den Pflanzenstand und/oder die Bestandsdichte.

Zusätzlich oder alternativ kann es sich bei den übertragenden Daten in Abhängigkeit von denen die Regelstrategie für die Durchführung des Arbeitsprozesses ausgewählt wird, insbesondere um Cloud-Daten, Einstellungsrichtlinien für Arbeitsaggregate 4, Einstellungsrichtlinien von einer Referenzmaschine, Flottendaten, insbesondere von typgleichen landwirtschaftlichen Arbeitsmaschinen oder landwirtschaftlichen Arbeitsmaschinen anderen Typs, und/oder dergleichen handeln.

Cloud-Daten sind solche Daten, welche von einem Cloud-Service bereitgestellt werden. Unter einem Cloud-Service wird die Bereitstellung von IT-Infrastruktur wie beispielsweise Speicherplatz, Rechenleistung und/oder Anwendungssoftware über das Internet verstanden. Dieser wird dabei in der Regel als Dienstleitung angeboten. Unter Einstellungsrichtlinien sind Hinweise und/oder Arbeitsanweisungen zur Einstellung der landwirtschaftlichen Arbeitsmaschine 2 zu verstehen. Flottendaten sind Zustandsdaten und/der Auftragsdaten mehrerer landwirtschaftlicher Arbeitsmaschinen 2. Diese können beispielsweise Daten zu anstehenden und abzuarbeitenden Arbeitsaufträgen und/oder gerade in der Bearbeitung befindenden Aufträgen und/oder zu einem Standort der jeweiligen landwirtschaftlichen Arbeitsmaschine 2 umfassen.

Ferner kann es sich bei den zu übertragenden Daten, in Abhängigkeit von denen die Regelstrategie für die Durchführung des Arbeitsprozesses ausgewählt wird, um Daten aus Big-Data-Analysen, um Daten einer Farm-Management-Software und/oder um Daten einer Crew-Management-Software handeln. Daten aus Big-Data-Analysen sind Daten, welche mittels einer Analyse von Massendaten, insbesondere unstrukturierten und in verschiedenen Formaten vorliegenden Massendaten, gewonnen wurden. Durch die Analyse werden versteckte Muster und Korrelationen in den Massendaten aufgedeckt. Diese Muster und Korrelationen werden in den Daten aus der Big-Data-Analysen verwendbar abgelegt. Daten einer Farm-Management-Software sind solche Daten, welche zum Betrieb und der Bewirtschaftung eines landwirtschaftlichen Betriebes verwendet und/oder bearbeitet werden. Diese umfassen beispielsweise Schlagdaten. Eine Crew-Management-Software ist eine Software, mittels welcher mehrere landwirtschaftliche Arbeitsmaschinen (Flotte) angeleitet und/oder überwacht werden. Daten einer Crew-Management-Software können Daten zu einem Arbeitsauftrag einer landwirtschaftlichen Arbeitsmaschine 2 und/oder Einstellungsrichtlinien für die Bearbeitung eines Arbeitsauftrag umfassen. Insbesondere können diese Daten eine Aufteilung eines Schlages in Teilschläge umfassen, welche von verschiedenen landwirtschaftlichen Arbeitsmaschinen 2 abgearbeitet werden.

Bei den übertragenen Daten, in Abhängigkeit von denen die Regelstrategie für die Durchführung des Arbeitsprozesses ausgewählt wird, kann es sich ferner um Aggregateeinstellungen handeln. Diese werden dann vorzugsweise von dem Fahrerassistenzsystem 3 berücksichtigt und die Regelstrategie für die Durchführung des Arbeitsprozesses auch in Abhängigkeit von diesen Aggregateeinstellungen ausgewählt. Vorzugsweise umfassen die übertragenen Daten, in Abhängigkeit von denen die Regelstrategie für die Durchführung des Arbeitsprozesses durchgeführt wird, weitere Daten, insbesondere der zuvor beschriebenen Art, welche keine Aggregateinstellungen umfassen. Insbesondere können die übertragenen Daten, in Abhängigkeit von denen die Regelstrategie ausgewählt wird, auch generell keine Aggregateeinstellungen umfassen.

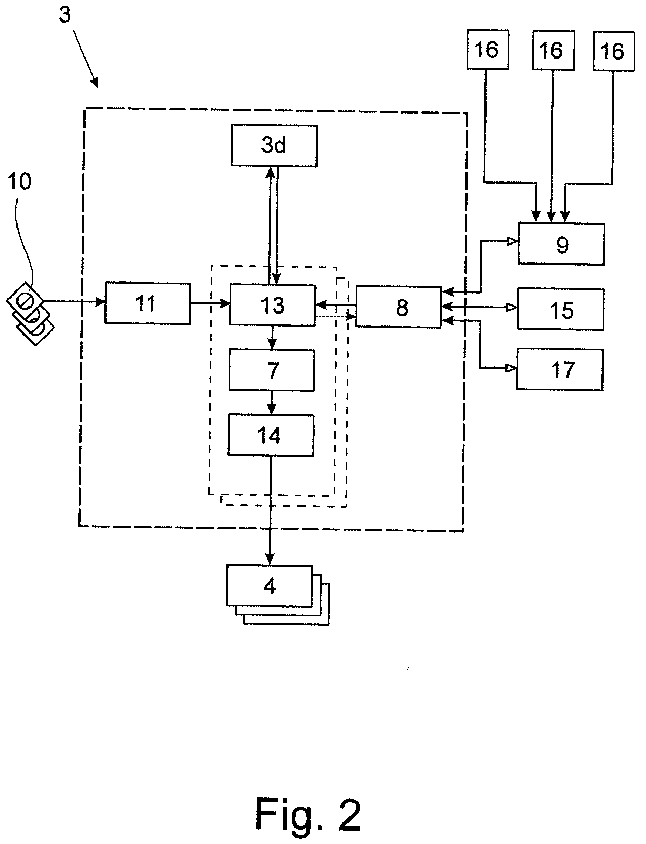

Hier und vorzugsweise ist es so, dass die übertragenen Daten, insbesondere analog zu den Messwertdaten, in den Optimierungsprozess für den Arbeitsprozess im Fahrerassistenzsystem 3 eingesteuert werden. Im Ausführungsbeispiel werden die externen Daten über die Schnittstelle 8 an einen Optimierer 13 übergeben. Auch die Sensordaten aus der Sensorüberwachung 11 werden vorzugsweise an diesen Optimierer 13 übergeben. Dieser Optimierer 13 wählt hier und vorzugsweise anhand eines Optiermierungsalgorithmus in Abhängigkeit von den übertragenen Daten und gegebenenfalls den Sensordaten eine Regelstrategie aus dem Regelwerk 7 aus und parametrisiert sie (Fig. 2).

Ein Interperter 14 stellt hier und vorzugsweise anhand der ausgewählten Regelstrategie mindestens einen Aggregatparameter des mindestens einen Arbeitsaggregats 4 gemäß der ausgewählten Regelstrategie ein. Hier und vorzugsweise wird der Aggregatparameter während des Arbeitsprozesses dann in Abhängigkeit von den Messwerten und anhand der ausgewählten Regelstrategie laufend verstellt, insbesondere bis eine neue Regelstrategie ausgewählt und/oder parametrisiert wird. Dies kann gegebenenfalls zyklisch erfolgen. Vorzugsweise ist es so, dass die übertragenen Daten eine Auswahl der Regelstrategie für die Durchführung des Arbeitsprozesses in Abhängigkeit von den übertragenen Daten und/oder den Messwerten auslösen. In diesem Fall stellen die übertragenen Daten einen Trigger für die Auswahl der Regelstrategie dar. Zusätzlich ober alternativ kann vorgesehen sein, dass die Auswahl einer Regelstrategie, welche in Abhängigkeit von übertragenen oder noch zu übertragenden Daten und/oder Messwerten erfolgt, von einem Bediener B auslösbar ist. In diesem Fall kann der Bediener B aktiv aufgrund von übertragenen Daten oder durch das Auswählen und/oder Anfordern von zu übertragenen Daten eine Optimierung des Arbeitsprozesses anstoßen und das Fahrerassistenzsystem 3 eine Regelstrategie basierend auf übertragenen Daten auswählen.

Bevorzugt können die Daten, unabhängig davon, ob die Auswahl der Regelstrategie durch die übertragenen Daten und/oder einen Bediener B ausgelöst wurde, direkt vom Fahrerassistenzsystem 3 für den Arbeitsprozess angewendet werden, gegebenenfalls mit einer Information für den Bediener B, beispielsweise auf einer Anzeigeeinheit 3d des Fahrerassistenzsystems 3. Alternativ kann jedoch auch vorgesehen sein, dass ein Optimierungsvorschlag auf dem Fahrerassistenzsystem 3 nach der Auswahl der Regelstrategie für die Durchführung des Arbeitsprozesses in Abhängigkeit von den übergebenen Daten angezeigt wird, und erst nach einer Bestätigung oder dem Ablauf einer vorbestimmten Zeit vom Fahrerassistenzsystem 3 ausgeführt wird.

Hier und vorzugsweise ist es ferner so, dass über die Schnittstelle 8 Daten, insbesondere Messdaten der Sensoren 10 und/oder Einstellungsdaten des mindestens einen Arbeitsaggregats 4 und/oder eine Parametrierung einer, insbesondere der gerade verwendeten, Regelstrategie an die externe und/oder eine andere externe Rechnereinheit 9 übertragen werden. Hier und vorzugsweise werden dabei diese Daten zu einem Datensatz zusammengefasst. Die Übertragung dieser Daten an eine externe Rechnereinheit 9 ermöglicht eine vereinfachte und verbesserte Auswertung und die Ableitung bzw. Identifizierung von besonders geeigneten Regelstrategien unabhängig vom Fahrerassistenzsystem 3. Die externe Rechnereinheit 9 betreibt hier und vorzugsweise einen Telemetrie-Dienst. Hinsichtlich des Zusammenfassens und Übertragens von Daten wird auf die EP 2 702 846 A2 verwiesen. Ihr Offenbarungsgehalt wird vollumfänglich mit einbezogen.

Ferner können über die Schnittstelle 8 zusätzliche, die Fahrfunktion betreffende Daten, zwischen dem Fahrerassistenzsystem 3 und der externen Rechnereinheit 9 übertragen werden. Vorzugsweise werden während des Arbeitsprozesses der landwirtschaftlichen Arbeitsmaschine 2 über die Schnittstelle 8 Daten von der externen Rechnereinheit 9 an das Fahrerassistenzsystem 3 übergeben und es werden in Abhängigkeit von den übergebenen Daten Fahrfunktionen für die Durchführung des Arbeitsprozesses gesteuert. Dies können beispielsweise Routeninformationen für den Arbeitsprozess sein. Die Datenübertragung ist in beide Richtungen möglich. Auch die Fahrfunktion betreffende Daten sind gegebenenfalls mit einem zusammengefassten Datensatz zu einem Telemetrie-Dienst übertragbar.

Darüber hinaus können über die Schnittstelle 8 zusätzlich Daten von einem Speichermedium 15 an das Fahrerassistenzsystem 3 übergeben werden. Auch in Abhängigkeit von den von dem Speichermedium 15 übergeben Daten kann die Regelstrategie für die Durchführung des Arbeitsprozesses ausgewählt werden. Hierbei kann es sich insbesondere um Aufgabeninformationen und/oder Schlaginformationen handeln.

Die externe Rechnereinheit 9 ist hier und vorzugsweise ein entfernt von der landwirtschaftlichen Arbeitsmaschine stehender Server. Die externe Rechnereinheit 9 kann insbesondere auch ein externes Rechnernetzwerk sein. Sie stellt ein Back-End bereit. Hier und vorzugsweise steht die externe Rechnereinheit 9 in einem Rechenzentrum. Die externe Rechnereinheit 9 betreibt hier und vorzugsweise einen Cloud-Service, welcher die zu übertragenden Daten bereitstellt, in Abhängigkeit von denen die Regelstrategie für die Durchführung des Arbeitsprozesses ausgewählt wird.

Hier und vorzugsweise generiert die externe Rechnereinheit 9, insbesondere der Cloud-Service, die zu übertragenden Daten, in Abhängigkeit von denen die Regelstrategie ausgewählt wird, überträgt die Daten, wobei diese dann von dem Fahrerassistenzsystem 3 verarbeitet werden. Im Rahmen dieser Verarbeitung wird die Regelstrategie dann ausgewählt. Die externe Rechnereinheit 9, insbesondere der Cloud-Service, routet Daten von Dienstanbietern 16 als die zu übertragenden Daten, in Abhängigkeit von denen die Regelstrategie ausgewählt wird. Zusätzlich oder alternativ kann die externe Rechnereinheit 9, insbesondere der Cloud-Service, von Dienstanbietern 16 übertragene Daten mittels eines Algorithmus aufbereiten und die aufbereiteten Daten als zu übertragende Daten, in Abhängigkeit von denen die Regelstrategie ausgewählt wird, an das Fahrerassistenzsystem 3 übertragen. Die von den Dienstanbietern 16 bereitgestellten Daten, welche über die externe Rechnereinheit 9 bzw. den Cloud-Service an das Fahrerassistenzsystem 3 übertragen werden, können Wetterinformationen, Flotteninformationen, Crew-Informationen und/oder Farm-Management-Informationen enthalten.

Alternativ kann die externe Rechnereinheit 9 ein internetfähiges, mobiles Datenübertragungsgerät 17 sein. Dies stellt die zu übertragenden Daten bereit, in deren Abhängigkeit die Regelstrategie für die Durchführung des Arbeitsprozesses ausgewählt wird.

Ferner kann das System ein mobiles Datenübertragungsgerät 17 aufweisen, auf welchem externe Daten als zu übertragende Daten auswählbar sind, welche zu dem Fahrerassistenzsystem 3 zur Auswahl der Regelstrategie übertragen werden. Diese ausgewählten Daten werden hier und vorzugsweise von der externen Rechnereinheit 9, insbesondere dem Cloud-Service, bereitgestellt.

### Bezugszeichen

- 1: System
- 2: landwirtschaftliche Arbeitsmaschine
- 3: Fahrerassistenzsystem
- 3a: Speicher
- 3b: Recheneinheit
- 3c: Benutzerschnittstelle
- 3d: Anzeigeeinheit
- 4: Arbeitsaggregat
- 5: Dreschwerk
- 5a: Dreschtrommel
- 5b: Dreschkorb
- 6: Abscheideeinrichtung
- 7: Regelwerk
- 8: Schnittstelle
- 9: Rechnereinheit
- 10: Sensor
- 11: Sensorüberwachung
- 12: Korngutsensor
- 13: Optimierer
- 14: Interpreter
- 15: Speichermedium
- 16: Dienstanbieter
- 17: mobiles Datenübertragungsgerät
- B: Bediener

## Patentansprüche

1. Landwirtschaftliche Arbeitsmaschine, insbesondere Erntemaschine, mit einem Fahrerassistenzsystem (3), welches im Rahmen der Durchführung eines Arbeitsprozesses Fahrfunktionen der landwirtschaftlichen Arbeitsmaschine (2) und mindestens ein Arbeitsaggregat (4) der landwirtschaftlichen Arbeitsmaschine (2) steuert,
wobei in dem Fahrerassistenzsystem (3) ein Regelwerk (7) in Form von Regelstrategien abgelegt ist, auf deren Basis das Fahrerassistenzsystem (3) das mindestens eine Arbeitsaggregat (4) gemäß einer Regelstrategie steuert,
**dadurch gekennzeichnet,**
**dass** das Fahrerassistenzsystem (3) eine Schnittstelle (8) zur Kommunikation mit einer entfernt von der landwirtschaftlichen Arbeitsmaschine (2) angeordneten externen Rechnereinheit (9) aufweist, über welche Daten zwischen dem Fahrerassistenzsystem (3) und der externen Rechnereinheit (9) austauschbar sind,
und **dass** das Fahrerassistenzsystem eingerichtet ist, in Abhängigkeit von über die Schnittstelle von der externen Rechnereinheit an das Fahrerassistenzsystem übergebenen Daten die Regelstrategie für die Durchführung des Arbeitsprozesses auszuwählen.

2. Landwirtschaftliche Arbeitsmaschine nach Anspruch 1, **dadurch gekennzeichnet, dass** die landwirtschaftliche Arbeitsmaschine (2) mindestens einen Sensor (10) aufweist, dessen Messwerte mittels einer Sensorüberwachung (11) überwacht werden, wobei auch in Abhängigkeit von den Messwerten die Regelstrategie für die Durchführung des Arbeitsprozesses ausgewählt wird.

3. Landwirtschaftliche Arbeitsmaschine nach Anspruch 1 oder 2, **dadurch gekennzeichnet, dass** die übertragenen Daten, in Abhängigkeit von denen die Regelstrategie für die Durchführung des Arbeitsprozesses ausgewählt wird, den Arbeitsprozess beeinflussende Umfeldinformationen aus dem Umfeld der Arbeitsmaschine (2) enthalten.

4. Landwirtschaftliche Arbeitsmaschine (2) nach einem der vorhergehenden Ansprüche, **dadurch gekennzeichnet, dass** die übertragenen Daten, in Abhängigkeit von denen die Regelstrategie für die Durchführung des Arbeitsprozesses ausgewählt wird, Cloud-Daten, Einstellungsrichtlinien für die landwirtschaftliche Arbeitsmaschine (2), Einstellungsrichtlinien von einer Referenzmaschine und/oder Flotten-Daten sind.

5. Landwirtschaftliche Arbeitsmaschine nach einem der vorhergehenden Ansprüche, **dadurch gekennzeichnet, dass** die übertragenen Daten, insbesondere analog zu den Messwerten, an einen Optimierer (13) des Fahrerassistenzsystems (3) für den Arbeitsprozess im Fahrerassistenzsystem (3) eingesteuert werden, vorzugsweise, dass ein Optimierungsalgorithmus in Abhängigkeit von den übertragenen Daten eine Regelstrategie aus dem Regelwerk (7) auswählt und parametrisiert.

6. Landwirtschaftliche Arbeitsmaschine nach einem der vorhergehenden Ansprüche, **dadurch gekennzeichnet, dass** die übertragenen Daten eine Auswahl der Regelstrategie für die Durchführung des Arbeitsprozesses in Abhängigkeit von den übertragenen Daten und/oder den Messwerten auslösen, und/oder, dass die Auswahl einer Regelstrategie, welche in Abhängigkeit von übertragenen oder noch zu übertragenden Daten und/oder Messwerten erfolgt, von einem Bediener (B) auslösbar ist.

7. Landwirtschaftliche Arbeitsmaschine nach einem der vorhergehenden Ansprüche, **dadurch gekennzeichnet, dass** über die Schnittstelle Daten, insbesondere Messdaten der Sensoren (10) und/oder Einstellungsdaten des mindestens einen Arbeitsaggregats (4) und/oder Parametrierungen einer Regelstrategie, an die externe Rechnereinheit (9) übertragen werden.

8. Landwirtschaftliche Arbeitsmaschine nach einem der vorhergehenden Ansprüche, **dadurch gekennzeichnet, dass** das Fahrerassistenzsystem (3) einen Speicher (3a) aufweist, in welchem das Regelwerk (7) abgelegt ist, und/oder, dass das Fahrerassistenzsystem (3) eine Recheneinheit (3b) aufweist, über welche die Fahrfunktionen der landwirtschaftlichen Arbeitsmaschine (2) und mindestens ein Arbeitsaggregat (4) der landwirtschaftlichen Arbeitsmaschine (2) gesteuert werden.

9. Landwirtschaftliche Arbeitsmaschine nach einem der vorhergehenden Ansprüche, **dadurch gekennzeichnet, dass** das Fahrerassistenzsystem (3) eine Benutzerschnittstelle (3c) mit einer Anzeigeeinheit (3d) aufweist, mittels welcher Zustände angezeigt und/oder Einstellungen der Steuerung des mindestens einen Arbeitsaggregats (4) und insbesondere der Fahrfunktion vornehmbar sind.

10. Landwirtschaftliche Arbeitsmaschine nach einem der vorhergehenden Ansprüche, **dadurch gekennzeichnet, dass** über die Schnittstelle (8) zusätzliche Daten von einem Speichermedium (15) an das Fahrerassistenzsystem (3) übergebbar sind und dass auch in Abhängigkeit von den von dem Speichermedium (15) zusätzlich übergebenen Daten die Regelstrategie für die Durchführung des Arbeitsprozesses ausgewählt wird.

11. System aus einer landwirtschaftlichen Arbeitsmaschine (2) und einer externen Rechnereinheit (9),
**dadurch gekennzeichnet,**
**dass** die landwirtschaftliche Arbeitsmaschine (2) nach einem der vorhergehenden Ansprüche ausgebildet ist.

12. System nach Anspruch 11, **dadurch gekennzeichnet, dass** die externe Rechnereinheit (9) einen Cloudservice betreibt, welcher die zu übertragenden Daten bereitstellt, in Abhängigkeit von denen die Regelstrategie für die Durchführung des Arbeitsprozesses ausgewählt wird.

13. System nach Anspruch 11 oder 12, **dadurch gekennzeichnet, dass** die externe Recheneinheit (9), insbesondere der Cloudservice, die zu übertragenden Daten, in Abhängigkeit von denen die Regelstrategie ausgewählt wird, generiert, dass die Daten übertragen werden und dass die Daten von dem Fahrerassistenzsystem (3) verarbeitet werden, vorzugsweise, dass im Rahmen der Verarbeitung die Regelstrategie ausgewählt wird.

14. System nach einem der Ansprüche 11 bis 13, **dadurch gekennzeichnet, dass** die externe Rechnereinheit (9), insbesondere der Cloudservice, Daten von Dienstanbietern (16) als die zu übertragenden Daten, in Abhängigkeit von denen die Regelstrategie ausgewählt wird, zu dem Fahrerassistenzsystem (3) routed, und/oder, dass die externe Rechnereinheit (9) Daten, insbesondere von Dienstanbietern (16), mittels eines Algorithmus aufbereitet und die aufbereiteten Daten als zu übertragende Daten, in Abhängigkeit von denen die Regelstrategie ausgewählt wird, an das Fahrerassistenzsystem (3) überträgt.

15. System nach einem der Ansprüche 11 bis 13, **dadurch gekennzeichnet, dass** das System (1) ein mobiles Datenübertragungsgerät (17) aufweist, auf welchem externe Daten als zu übertragende Daten auswählbar sind, welche zu dem Fahrerassistenzsystem (3) übertragen werden.

## Claims

1. An agricultural working machine, in particular a harvesting machine, with a driver assistance system (3) which, in the context of carrying out an operating procedure, controls driving functions of the agricultural working machine (2) and at least one working assembly (4) of the working machine (2), wherein a set of rules (7) in the form of control strategies is stored in the driver assistance system (3), on the basis of which set of rules the driver assistance system (3) controls the at least one working assembly (4) in accordance with a control strategy,
**characterized in that**
the driver assistance system (3) has an interface (8) for communication with an external processing unit (9) which is remote from the agricultural working machine (2), via which processing unit data can be exchanged between the driver assistance system (3) and the external processing unit (9), and **in that** the driver assistance system is configured to select the control strategy for carrying out the operating procedure as a function of data transferred from the external processing unit to the driver assistance system via the interface.

2. The agricultural working machine according to claim 1, **characterized in that** the agricultural working machine (2) has at least one sensor (10) the measured values of which are monitored by means of a sensor monitor (11), wherein the control strategy for carrying out the operating procedure is also selected as a function of the measured values.

3. The agricultural working machine according to claim 1 or claim 2, **characterized in that** the transferred data as a function of which the control strategy for carrying out the operating procedure is selected contains environmental information from the environment of the working machine (2) which influences the operating procedure.

4. The agricultural working machine (2) according to one of the preceding claims, **characterized in that** the transferred data as a function of which the control strategy for carrying out the operating procedure is selected are cloud data, setting guidelines for the agricultural working machine (2), setting guidelines for a reference machine and/or fleet data.

5. The agricultural working machine according to one of the preceding claims, **characterized in that** the transferred data, in particular in a similar manner to the measured values, are input to an optimizer (13) of the driver assistance system (3) for the operating procedure in the driver assistance system (3), preferably **in that** an optimization algorithm selects and parameterizes a control strategy from the set of rules (7) as a function of the transferred data.

6. The agricultural working machine according to one of the preceding claims, **characterized in that** the transferred data initiates a selection of the control strategy for carrying out the operating procedure as a function of the transferred data and/or the measured values, and/or **in that** the selection of a control strategy which is carried out as a function of data which has been transferred or are still to be transferred can be initiated by an operator (B).

7. The agricultural working machine according to one of the preceding claims, **characterized in that** data, in particular measured data from the sensors (10) and/or setting data for the at least one working assembly (4) and/or parameterizations for a control strategy are transferred to the external processing unit (9) via the interface.

8. The agricultural working machine according to one of the preceding claims, **characterized in that** the driver assistance system (3) has a memory (3a) in which the set of rules (7) is stored, and/or **in that** the driver assistance system (3) has a processing unit (3b) by means of which the driving functions of the agricultural working machine (2) and at least one working assembly (4) of the agricultural working machine (2) are controlled.

9. The agricultural working machine according to one of the preceding claims, **characterized in that** the driver assistance system (3) has a user interface (3c) with a display unit (3d), by means of which states are displayed and/or settings for controlling the at least one working assembly (4), and in particular the driving function, can be specified.

10. The agricultural working machine according to one of the preceding claims, **characterized in that** additional data can be transferred from a storage medium (15) to the driver assistance system (3) via the interface (8) and **in that**, also as a function of the additional data transferred from the storage medium, the control strategy for carrying out the operating procedure can be selected.

11. A system produced from an agricultural working machine (2) and an external processing unit (9),
**characterized in that**
the agricultural working machine (2) is configured in accordance with one of the preceding claims.

12. The system according to claim 11, **characterized in that** the external processing unit (9) operates a cloud service which provides the data to be transferred, as a function of which the control strategy for carrying out the operating procedure is selected.

13. The system according to claim 11 or claim 12, **characterized in that** the external processing unit (9), in particular the cloud service, generates the data to be transferred as a function of which the control strategy is selected, **in that** the data are transferred and **in that** the data are processed by the driver assistance system (3), preferably **in that** the control strategy is selected in the context of the processing.

14. The system according to one of claims 11 to 13, **characterized in that** the external processing unit (9), in particular the cloud service, routes data from service providers (16) to the driver assistance system (3) as the data to be transferred, as a function of which the control strategy is selected, and/or **in that** the external processing unit (9) processes data, in particular from service providers (16), by means of an algorithm and transfers the prepared data to the driver assistance system (3) as data to be transferred, as a function of which the control strategy is selected.

15. The system according to one of claims 11 to 13, **characterized in that** the system (1) has a mobile data transfer device (17) on which external data can be selected as data to be transferred which are transferred to the driver assistance system (3).

## Revendications

1. Machine de travail agricole, en particulier machine de récolte, comprenant un système d'assistance à la conduite (3) qui, dans le cadre de l'exécution d'un processus de travail, commande des fonctions de marche de la machine de travail agricole (2) et au moins un organe de travail (4) de la machine de travail agricole (2),
dans le système d'assistance à la conduite (3) étant enregistrée une base de règles (7) en forme de stratégies de régulation sur la base desquelles le système d'assistance à la conduite (3) commande le au moins un organe de travail (4) selon une stratégie de régulation,
**caractérisée en ce que**
le système d'assistance à la conduite (3) comporte une interface (8) de communication avec une unité de calcul externe (9) qui est disposée à distance de la machine de travail agricole (2) et par l'intermédiaire de laquelle des données sont échangeables entre le système d'assistance à la conduite (3) et l'unité de calcul externe (9),
et **en ce que** le système d'assistance à la conduite est agencé pour sélectionner la stratégie de régulation pour l'exécution du processus de travail en fonction de données transmises par l'unité de calcul externe au système d'assistance à la conduite par l'intermédiaire de l'interface.

2. Machine de travail agricole selon la revendication 1, **caractérisée en ce que** la machine de travail agricole (2) comporte au moins un capteur (10) dont les valeurs mesurées sont surveillées à l'aide d'un moyen de surveillance de capteur (11), la stratégie de régulation pour l'exécution du processus de travail étant également sélectionnée en fonction des valeurs mesurées.

3. Machine de travail agricole selon la revendication 1 ou 2, **caractérisée en ce que** les données transmises, en fonction desquelles est sélectionnée la stratégie de régulation pour l'exécution du processus de travail, contiennent des informations d'environnement influençant le processus de travail et provenant de l'environnement de la machine de travail (2).

4. Machine de travail agricole (2) selon une des revendications précédentes, **caractérisée en ce que** les données transmises, en fonction desquelles la stratégie de régulation pour l'exécution du processus de travail est sélectionnée, sont des données du Cloud, des directives de réglage pour la machine de travail agricole (2), des directives de réglage d'une machine de référence et/ou des données de flotte.

5. Machine de travail agricole selon une des revendications précédentes, **caractérisée en ce que**, en particulier de manière analogue aux valeurs mesurées, les données transmises sont envoyées à un optimiseur (13) du système d'assistance à la conduite (3) pour le processus de travail dans le système d'assistance à la conduite (3), de préférence **en ce qu'**un algorithme d'optimisation sélectionne une stratégie de régulation dans la base de règles (7) et la paramètre en fonction des données transmises.

6. Machine de travail agricole selon une des revendications précédentes, **caractérisée en ce que** les données transmises déclenchent une sélection de la stratégie de régulation pour l'exécution du processus de travail en fonction des données transmises et/ou des valeurs mesurées, et/ou **en ce que** la sélection d'une stratégie de régulation, qui s'effectue en fonction de données et/ou de valeurs mesurées transmises ou encore à transmettre, est déclenchable par un utilisateur (B).

7. Machine de travail agricole selon une des revendications précédentes, **caractérisée en ce que** par l'intermédiaire de l'interface sont transmises à l'unité de calcul externe (9) en particulier des données de mesure des capteurs (10) et/ou des données de réglage du au moins un organe de travail (4) et/ou des paramétrages d'une stratégie de régulation.

8. Machine de travail agricole selon une des revendications précédentes, **caractérisée en ce que** le système d'assistance à la conduite (3) comporte une mémoire (3a) dans laquelle la base de règles (7) est enregistrée, et/ou **en ce que** le système d'assistance à la conduite (3) comporte une unité de calcul (3b) par l'intermédiaire de laquelle les fonctions de marche de la machine de travail agricole (2) et au moins un organe de travail (4) de la machine de travail agricole (2) sont commandés.

9. Machine de travail agricole selon une des revendications précédentes, **caractérisée en ce que** le système d'assistance à la conduite (3) comporte une interface utilisateur (3c) avec une unité d'affichage (3d) au moyen de laquelle des états sont affichés et/ou des réglages de la commande du au moins un organe de travail (4) et en particulier de la fonction de marche peuvent être entrepris.

10. Machine de travail agricole selon une des revendications précédentes, **caractérisée en ce que**, par l'intermédiaire de l'interface (8), des données supplémentaires peuvent être transmises par un moyen de mémoire (15) au système d'assistance à la conduite (3), et **en ce que** la stratégie de régulation pour l'exécution du processus de travail est sélectionnée également en fonction des données transmises à titre supplémentaire par le moyen de mémoire (15).

11. Système composé d'une machine de travail agricole (2) et d'une unité de calcul externe (9)
**caractérisé en ce que**
la machine de travail agricole (2) est conçue selon une des revendications précédentes.

12. Système selon la revendication 11, **caractérisé en ce que** l'unité de calcul externe (9) exploite un service du Cloud qui fournit les données à transmettre, en fonction desquelles est sélectionnée la stratégie de régulation pour l'exécution du processus de travail.

13. Système selon la revendication 11 ou 12, **caractérisé en ce que** l'unité de calcul externe (9), en particulier le service du Cloud, génère les données à transmettre en fonction desquelles la stratégie de régulation est sélectionnée, **en ce que** les données sont transmises et **en ce que** les données sont traitées par le système d'assistance à la conduite (3), de préférence **en ce que** dans le cadre du traitement est sélectionnée la stratégie de régulation.

14. Système selon une des revendications 11 à 13, **caractérisé en ce que** l'unité de calcul externe (9), en particulier le service du Cloud, dirige vers le système d'assistance à la conduite (3) des données de prestataires de services (16) au titre des données à transmettre en fonction desquelles la stratégie de régulation est sélectionnée, et/ou **en ce que** l'unité de calcul externe (9) transmet au système d'assistance à la conduite (3) des données, en particulier de prestataires de services (16), les met en forme au moyen d'un algorithme et sélectionne les données mises en forme au titre des données à transmettre en fonction desquelles la stratégie de régulation est sélectionnée.

15. Système selon une des revendications 11 à 13, **caractérisé en ce que** le système (1) comporte un appareil mobile de transmission de données (17) sur lequel des données externes sont sélectionnables à titre de données à transmettre, lesquelles sont transmises au système d'assistance à la conduite (3).
